# EUROPEAN PATENT SPECIFICATION

(11) **EP 2 985 979 B1**
(45) Date of publication and mention of the grant of the patent: **05.07.2017**
(21) Application number: 15180708.8
(22) Date of filing: 12.08.2015
(51) Int. Cl.: H04L 29/08, G06F 21/62, G06F 11/14

(54) **METHOD AND TERMINAL FOR BACKING UP DATA**
VERFAHREN UND VORRICHTUNG ZUR SICHERUNG VON DATEN
PROCÉDÉ ET TERMINAL SERVANT À SAUVEGARDER DES INFORMATIONS

(30) Priority: 15.08.2014 CN 201410404549
(43) Date of publication of application: 17.02.2016
(73) Proprietor: Xiaomi Inc., Beijing 100085 (CN)
(72) Inventor: LIU, Tiejun, 100085 Haidian District (CN); LIU, Wen, 100085 Haidian District (CN); LI, Zheng, 100085 Haidian District (CN)
(74) Representative: Sadler, Peter Frederick

(56) References cited:
- WO-A1-2004/034286
- US-A1- 2011 106 755
- US-A1- 2012 150 808
- US-B1- 8 370 532
- US-B2- 8 504 830
- Western Digital: "My Net (TM) N900 Central HD Dual-Band Storage Router User Manual", , 30 November 2012 (2012-11-30), pages 1-97, XP055278152, Retrieved from the Internet: URL:http://www.wdc.com/wdproducts/library/ UM/ENG/4779-705074.pdf [retrieved on 2016-06-06]

## Description

### TECHNICAL FIELD

The present disclosure generally relates to the field of data backup techniques, and more particularly, to a method for backing up data, and a terminal for backing up data.

### BACKGROUND

With the increasing diversity of the function of a mobile terminal, a user will use the mobile terminal in various scenes such as work and life, and store various types of resulting data in the mobile terminal. If the mobile terminal is lost, damaged, etc., there is a risk of losing the data. Alternatively, when the user performs a manual management due to insufficient storage space of the mobile terminal, some important data may be erroneously deleted.

In the related art, based on the intelligent development and application of a router, the router is configured with a hard disk with a high capacity, such that the user may back up data in the mobile terminal to the router, and consequently it is possible to ensure the security of data and the user may view backup data conveniently.

However, in the related art, the backup is performed based on the unit of all the data to be backed up in the mobile terminal, i.e. it is necessary to transmit all the data to be backed up in the mobile terminal to the router every time, such that the data transmission is very time-consuming and thus the application experience of the user is affected.

US patent application with publication no. US 2011/0106755 discloses a method including generating a list of current files stored in a user device, wherein the list of current files includes unique file identifiers, each associated with a corresponding one of the current files. The method further includes sending the list of current files from the user device to a network device and receiving a copy list from the network device in the user device.

### SUMMARY

The present disclosure provides a method for backing up data, a device for backing up data, and an electronic device, so as to solve the technical problems of large transmission quantity and great time consumption when data backup is performed on a terminal in the related art.

The invention in its various aspects is defined in the independent claims below to which reference should now be made. Preferred features are set out in the dependent claims.

The technical solution provided by embodiments of the present disclosure may have the following advantageous effects.

In the present disclosure, the incremental backup of data from the terminal may be realized by detecting the new file on the terminal, i.e. it is only necessary to transmit and back up the new file to the router, thus largely reducing the transmission quantity of data and enhancing the backup efficiency of data. Meanwhile, by querying whether the new file is stored in the router, the router may not perform a repeated backup on the same file, thus enhancing the utilization rate of the storage space of the router.

In the present disclosure, by an account login mechanism, it is determined whether the new file is stored in only backup data corresponding to an account currently logged in on the terminal, such that the backup data management based on an account may be conveniently realized, and contents of backup data under other accounts may not be leaked, thus enhancing the security of the backup data.

In the present disclosure, by an account login mechanism, storage paths of backup data of different accounts may be distinguished, and the backup storage of the new file may be realized based on an account, such that backup data corresponding to different accounts may be effectively managed.

In the present disclosure, by distinguishing different devices under the same account, a plurality of devices sharing the same account may use different backup data storage paths, such that the backup storage of the new file may be realized based on an account and a device, thus realizing the more careful management of backup data.

In the present disclosure, by an account login mechanism, the user may only view and manage backup data corresponding to the logged-in account, such that the router may manage the backup data conveniently and the security of the backup data may be enhanced.

It is to be understood that both the foregoing general description and the following detailed description are exemplary and explanatory only and are not restrictive of the invention, as claimed. The invention is defined by the independent claims.

### BRIEF DESCRIPTION OF THE DRAWINGS

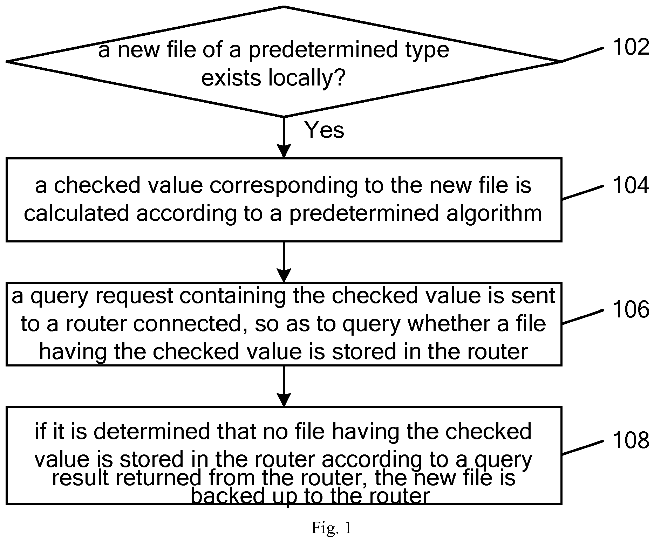

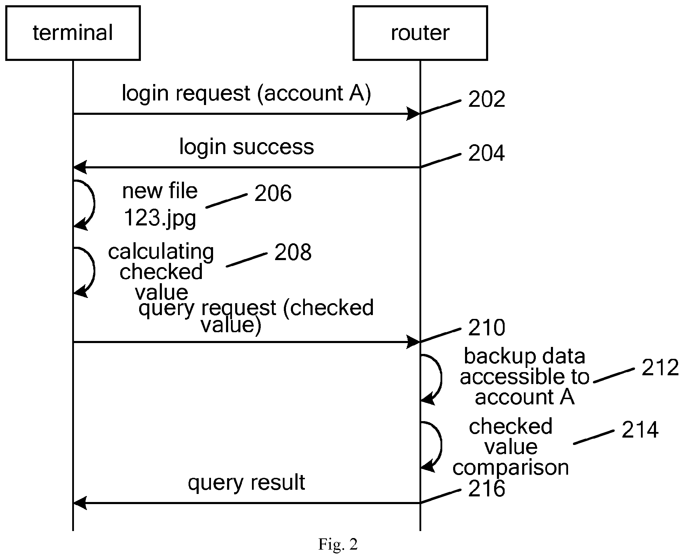

The accompanying drawings, which are incorporated in and constitute a part of this specification, illustrate embodiments consistent with the invention and, together with the description, serve to explain the principles of the invention.Fig. 1 is a flow chart of a method for backing up data according to an exemplary embodiment. Fig. 2 is a flow chart of a method for backing up data according to another exemplary embodiment.
Fig. 3 is a flow chart of managing backup data according to an exemplary embodiment.
Figs. 4-6 are schematic diagrams of a terminal interface according to an exemplary embodiment.
Figs. 7-11 are block diagrams of a device for backing up data according to an exemplary embodiment.
Fig. 12 is a block diagram of a device for backing up data according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Fig. 1 is a flow chart of a method for backing up data according to an exemplary embodiment. As shown in Fig. 1, the method may be used in a terminal and includes the following steps.

In step 102, it is determined whether a new file of a predetermined type exists locally.

In this embodiment, it may be understood that the condition that "a new file of a predetermined type exists" is used as a trigger condition, and when the trigger condition is satisfied, step 104 is triggered, otherwise step 104 is not triggered. Alternatively, it may also be understood that when the condition that "a new file of a predetermined type exists" is satisfied, step 104 is executed, otherwise a normal processing is performed in a manner in the related art.

The "predetermined type" may be set according to practical needs. For example, at least one of a file type (e.g., a picture, a video, etc.), a file size (e.g., smaller than 10 KB, greater than 1M, etc.), and an application (e.g., "camera", "browser", etc.) to which the file belongs is used as a judgment condition, so as to determine whether the new file currently examined belongs to the "predetermined type".

In step 104, if the new file of the predetermined type exists, a checked value corresponding to the new file is calculated according to a predetermined algorithm.

In this embodiment, it is possible to ensure that the terminal and the router adopt the same "predetermined algorithm" to calculate the checked value in a default or pre-negotiated manner. In an exemplary embodiment of the present disclosure, the "predetermined algorithm" may be a HASH algorithm, a MD5 (Message Digest Algorithm 5) algorithm, etc.

In step 106, a query request containing the checked value is sent to a router connected, so as to query whether a file having the checked value is stored in the router.

In this embodiment, the router may calculate the checked value of the stored file in real time when receiving the query request. Alternatively, the router may previously calculate the checked value of the stored file, and correspondingly store the stored file and the checked value corresponding to the stored file, such that the router may realize a faster query operation according to the received query request.

In step 108, if it is determined that no file having the checked value is stored in the router according to a query result returned from the router, the new file is backed up to the router.

It can be seen from the above embodiments that, in the present disclosure, the incremental backup of data from the terminal may be realized by detecting the new file on the terminal, i.e. it is only necessary to transmit and back up the new file to the router, thus largely reducing the transmission quantity of data and enhancing the backup efficiency of data. Meanwhile, by querying whether the new file is stored in the router, the router may not perform a repeated backup on the same file, thus enhancing the utilization rate of the storage space of the router.

Fig. 2 shows a method for backing up data according to another exemplary embodiment. Referring to Fig. 2, the method includes the following steps.

In step 202, a terminal joins a local network created by a router, and sends a login request to the router. It is assumed that the login request contains a login account and a login password corresponding to account A.

In step 204, the router queries account information matching with a combination of the login account and the login password in the received login request according to a local account information table, assuming it is queried that the account information corresponds to account A, and the router returns a corresponding login success message to the terminal.

In step 206, the terminal detects whether a new file of a predetermined type exists locally, and it is assumed that a new file 123.jpg of a predetermined type "photo generated by application "camera"" is detected.

In step 208, a checked value of the new file 123.jpg is calculated according to a predetermined algorithm such as the MD5 algorithm, so as to obtain a corresponding 128-bit checked value.

In step 210, the terminal sends a query request to the router, in which the query request contains the checked value calculated in step 208, such as the above 128-bit checked value.

In step 212, since the terminal has logged in the router via account A, the router may acquire backup data accessible to account A.

In this embodiment, when the router stores and manages backup data corresponding to each account according to account registration situations, a user may set a corresponding access permission for the backup data corresponding to each account, for example, accessible to accounts of all persons, inaccessible to accounts of any persons, accessible or inaccessible to accounts of designated persons. Therefore, the backup data accessible to account A may only contain backup data corresponding to account A, and may also contain backup data corresponding to other accounts for which account A has a corresponding access permission.

In step 214, the router compares the checked value in the received query request with a checked value of the backup data accessible to account A, in which all the checked values are obtained by calculation using the same algorithm, so as to determine whether the file 123.jpg exists in the backup data accessible to account A.

In this embodiment, since the router only compares the checked value in the received query request with the checked value of the backup data accessible to account A currently logged in on the terminal, on one hand, the comparison range may be narrowed so as to enhance the efficiency; on the other hand, for an account having a higher privacy requirement, whether or not the file 123.jpg exists in backup data corresponding to the account, the account may not be used for the checked value comparison, such that it may be ensured that the content of the backup data corresponding to the account may not be leaked, and the backup data may not be scanned randomly, thus enhancing the security and privacy of the backup data.

In step 216, the router returns a query result to the terminal, if the query result indicates backup data having the same checked value exists, the terminal will not back up the file 123.jpg to the router; if the query result indicates no backup data having the same checked value exists, the terminal backs up the file 123.jpg to the router. The backup operation of the file 123.jpg may be realized in the following manners.

In an exemplary embodiment, since the terminal has logged in the router via account A, the new file 123.jpg may be sent to the router via the logged-in account A, such that the router backs up the new file 123.jpg to a path corresponding to the logged-in account A.

Since the type of the new file 123.jpg is a picture, the path corresponding to account A may be Data/A/picture. Certainly, the router may also first establish paths corresponding to different "types" (for example, if the "type" is a picture, the corresponding path is Data/picture), and creates subpath corresponding to the account under each path, so the path corresponding to account A may be Data/picture/A. The router may further acquire other information on the new file 123.jpg. For example, the router acquires the file creation time of July 30, 2014, and stores the file 123.jpg in a path Data/A/picture/2014/07 (photos of account A in July, 2014) or Data/A/picture/2014/07/30 (photos of account A on July 30, 2014). If the file creation time is June 11, 2014, the router stores the file 123.jpg in a path Data/A/picture/2014/06 (photos of account A in June, 2014) or Data/A/picture/2014/06/11 (photos of account A on June 11, 2014). Alternatively, the router may also acquire the size of the new file 123.jpg, for example, if the size of the file 123.jpg is 3M, the router stores the file 123.jpg in a path Data/A/picture/5M (photos of account A with a size less than 5M).

In another exemplary embodiment, the router may also perform a more detailed classified storage of the new file according to different devices using the same account, and the terminal may perform the following operation: labeling the new file 123.jpg via an identifier of a local device, such that the router backs up the new file 123.jpg to a path corresponding to the logged-in account A and the local device.

Since a plurality of devices may share the same account, for example, a plurality of devices such as a mobile phone and a tablet PC (personal computer) of the same user, or mobile phones of users of the same family, the user may need to realize a finer backup data management for each device. For example, for the path "Data/A/picture/2014/07", if it is necessary to distinguish a device "Xiaomi 2S" from a device "Xiaomi 3", the path may be converted into a subpath "Data/A/xiaomi2S/picture/2014/07" corresponding to "Xiaomi 2S" and a subpath "Data/A/xiaomi3/picture/2014/07" corresponding to "Xiaomi 3". If there are a plurality of devices with the same model under the same account, for example, there are two "Xiaomi 2S" under account A, the two "Xiaomi 2S" may correspond to subpaths "Data/A/xiaomi2S-1/picture/2014/07" and "Data/A/xiaomi2S-2/picture/2014/07" respectively.

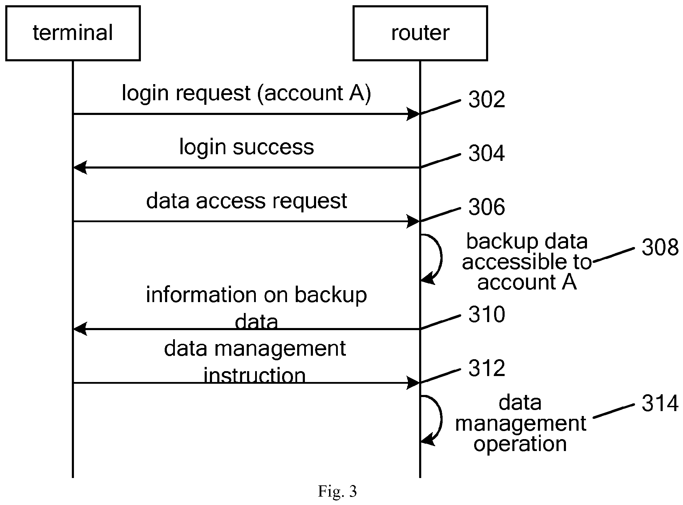

The respective managements of backup data corresponding to different accounts may be realized by storing backup data according to accounts (or accounts and devices), which will be illustrated in detail with reference to Fig. 3.

As shown in Fig. 3, a method for managing backup data according to an exemplary embodiment of the present disclosure includes the following steps.

In step 302, it is assumed that a terminal initiates a login request to a router via account A.

In step 304, the router verifies a combination of a login account and a login password contained in the login request, and returns a login success message to the terminal after the verification is successful.

In step 306, the terminal sends a data access request to the router according to the logged-in account A.

In step 308, the router determines backup data accessible to account A.

In this embodiment, the user may set an access permission of backup data corresponding to the logged-in account according to practical needs, so by logging in account A, the terminal may only access backup data corresponding to account A, and may also access backup data corresponding to other accounts for which account A has a corresponding access permission.

In step 310, the router sends information on backup data accessible to account A determined in step 308 to the terminal.

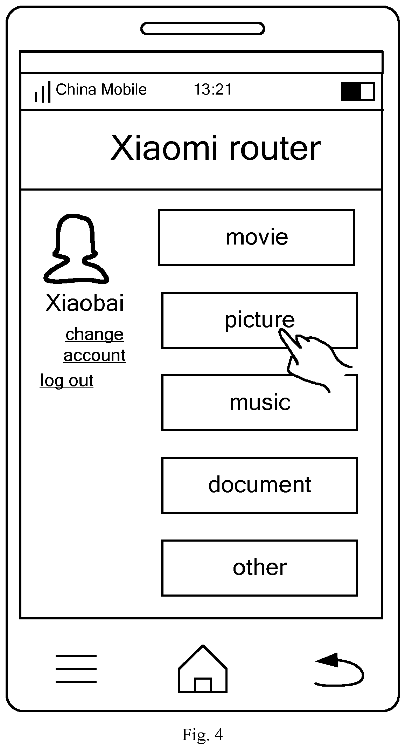

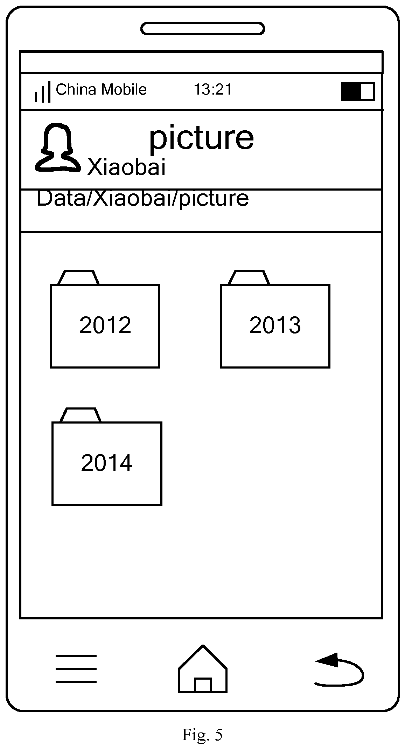

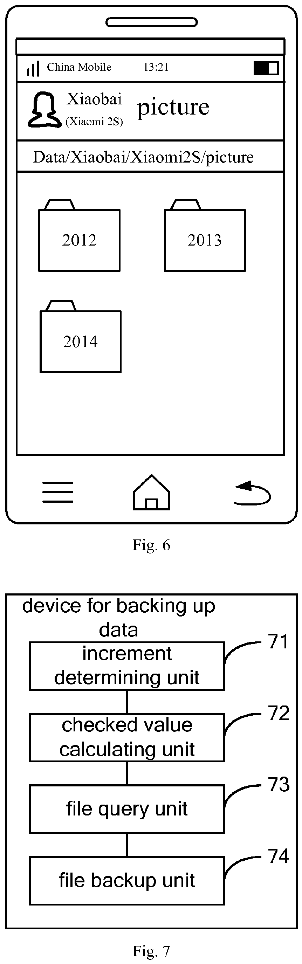

In this embodiment, assuming the user may only access backup data corresponding to the logged-in account, the terminal may generate a backup data management interface as shown in Fig. 4 according to the information on backup data accessible to account A returned from the router, and the user may access backup data of corresponding types under corresponding paths by selecting buttons such as "movie", "picture", and "music" in the interface. For example, after the user clicks the "picture" button, the terminal initiates an access request to a corresponding router, and the router further returns information on backup data under the path, and the terminal generates an interface as shown in Fig. 5 or Fig. 6.

When the router manages backup data according to only account information, the storage path of backup data of the "picture" type corresponding to account A is "Data/Xiaobai/picture" shown in Fig. 5. When the router manages backup data according to account information and device information, the storage path of backup data of the "picture" type corresponding to account A and the currently used "Xiaomi 2S" is "Data/Xiaobai/xiaomi2S/picture" shown in Fig. 6.

In step 312, the terminal sends a data management instruction to the router, so as to manage backup data accessible to account A.

In this embodiment, the user may perform various processings such as addition, deletion, copy, movement, name changing, etc. on the observed backup data via the management interface on the terminal, so as to realize the management of backup data.

Corresponding to the embodiments of the above access processing method, the present disclosure further provides embodiments of an access processing device.

Fig. 7 is a block diagram of a device for backing up data according to an exemplary embodiment. Referring to Fig. 7, the device includes an increment determining unit 71, a checked value calculating unit 72, a file query unit 73, and a file backup unit 74.

The increment determining unit 71 is configured to determine whether a new file of a predetermined type exists locally.

The checked value calculating unit 72 is configured to calculate a checked value corresponding to the new file according to a predetermined algorithm if it is determined that the new file of the predetermined type exists.

The file query unit 73 is configured to send a query request containing the checked value to a router connected, so as to query whether a file having the checked value is stored in the router.

The file backup unit 74 is configured to back up the new file to the router if it is determined that no file having the checked value is stored in the router according to a query result returned from the router.

In the above embodiment, the incremental backup of data from the terminal may be realized by detecting the new file on the terminal, i.e. it is only necessary to transmit and back up the new file to the router, thus largely reducing the transmission quantity of data and enhancing the backup efficiency of data. Meanwhile, by querying whether the new file is stored in the router, the router may not perform a repeated backup on the same file, thus enhancing the utilization rate of the storage space of the router.

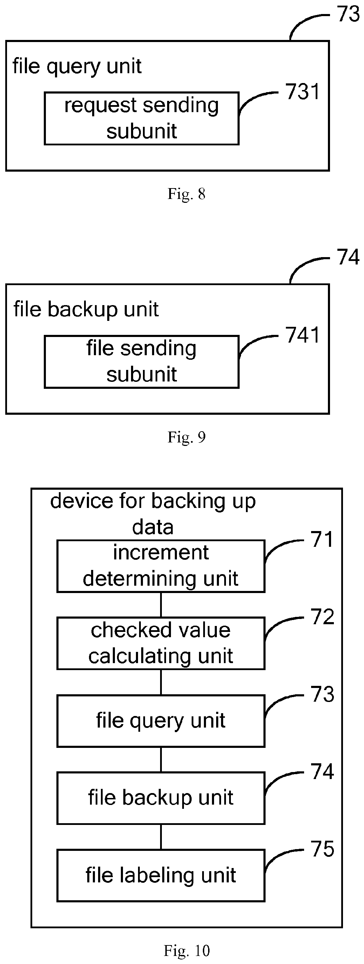

Fig. 8 is a block diagram of another device for backing up data according to an exemplary embodiment. As shown in Fig. 8, in this embodiment, based on the above embodiment shown in Fig. 7, the file query unit 73 may include a request sending subunit 731.

The request sending subunit 731 is configured to send the query request to the router via a logged-in account if the router is logged in according to account information previously registered, such that the router queries whether the file having the checked value is stored in backup data accessible to the logged-in account.

In the above embodiment, by an account login mechanism, it is determined whether the new file is stored in only backup data corresponding to an account currently logged in on the terminal, such that the backup data management based on an account may be conveniently realized, and contents of backup data under other accounts may not be leaked, thus enhancing the security of the backup data.

Fig. 9 is a block diagram of another device for backing up data according to an exemplary embodiment. As shown in Fig. 9, in this embodiment, based on the above embodiment shown in Fig. 7, the file backup unit 74 may include a file sending subunit 741.

The file sending subunit 741 is configured to send the new file to the router via a logged-in account if the router is logged in according to account information previously registered, such that the router backs up the new file to a path corresponding to the logged-in account.

In the above embodiment, by an account login mechanism, storage paths of backup data of different accounts may be distinguished, and the backup storage of the new file may be realized based on an account, such that backup data corresponding to different accounts may be effectively managed.

Fig. 10 is a block diagram of another device for backing up data according to an exemplary embodiment. As shown in Fig. 10, in this embodiment, based on the above embodiment shown in Fig. 7, the device for backing up data may further include a file labeling unit 75.

The file labeling unit 75 is configured to label the new file via an identifier of a device to which the device for backing up data belongs, such that the router backs up the new file to a path corresponding to the logged-in account and the device to which the device for backing up data belongs.

In this embodiment, by distinguishing different devices under the same account, a plurality of devices sharing the same account may use different backup data storage paths, such that the backup storage of the new file may be realized based on an account and a device, thus realizing the more careful management of backup data.

It should be noted that the file labeling unit 75 in the above device embodiment shown in Fig. 10 may also be contained in the device embodiment shown in any one of Figs. 7-9, which is not limited in the present disclosure.

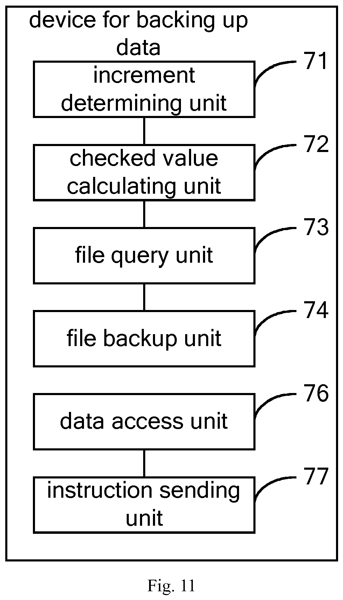

Fig. 11 is a block diagram of another device for backing up data according to an exemplary embodiment. As shown in Fig. 11, in this embodiment, based on the above embodiment shown in Fig. 7, the device for backing up data may further include a data access unit 76 and an instruction sending unit 77.

The data access unit 76 is configured to send a data access request to the router, and to receive information on backup data accessible to the logged-in account and returned from the router if the router is logged in according to account information previously registered.

The instruction sending unit 77 is configured to send a data management instruction to the router, so as to manage the backup data accessible to the logged-in account.

In the above embodiment, by an account login mechanism, the user may only view and manage backup data corresponding to the logged-in account, such that the router may manage the backup data conveniently and the security of the backup data may be enhanced.

It should be noted that the data access unit 76 and the instruction sending unit 77 in the above device embodiment shown in Fig. 11 may also be contained in the device embodiment shown in any one of Figs. 7-10, which is not limited in the present disclosure.

Concerning the implementation process of the function and action of each unit in the above device, reference is made to the implementation process of corresponding steps in the above method, which will not be elaborated herein.

Since the device embodiments substantially correspond to the method embodiments, concerning related parts of the device embodiments, reference is made to corresponding parts of the method embodiments. The device embodiments described above are merely exemplary, units illustrated as separate components may be or may not be physically separated, components displayed as units may be or may not be physical units, i.e. may be located in the same place, and may also be distributed on a plurality of network units. A part or all of the modules may be selected according to practical needs so as to achieve the object of the solution of the present disclosure, which may be understood and implemented by those skilled in the art without creative labor.

Accordingly, the present disclosure further provides an access processing device, including: a processor; and a memory for storing instructions executable by the processor, in which the processor is configured to: determine whether a new file of a predetermined type exists locally; calculate a checked value corresponding to the new file according to a predetermined algorithm if the new file of the predetermined type exists; send a query request containing the checked value to a router connected, so as to query whether a file having the checked value is stored in the router; back up the new file to the router if determining that no file having the checked value is stored in the router according to a query result returned from the router.

Accordingly, the present disclosure further provides a terminal. The terminal includes a memory and one or more programs stored in the memory, and is configured so that one or more processors execute instructions of performing the following operations contained in the one or more programs: determining whether a new file of a predetermined type exists locally; calculating a checked value corresponding to the new file according to a predetermined algorithm if the new file of the predetermined type exists; sending a query request containing the checked value to a router connected, so as to query whether a file having the checked value is stored in the router; backing up the new file to the router if determining that no file having the checked value is stored in the router according to a query result returned from the router.

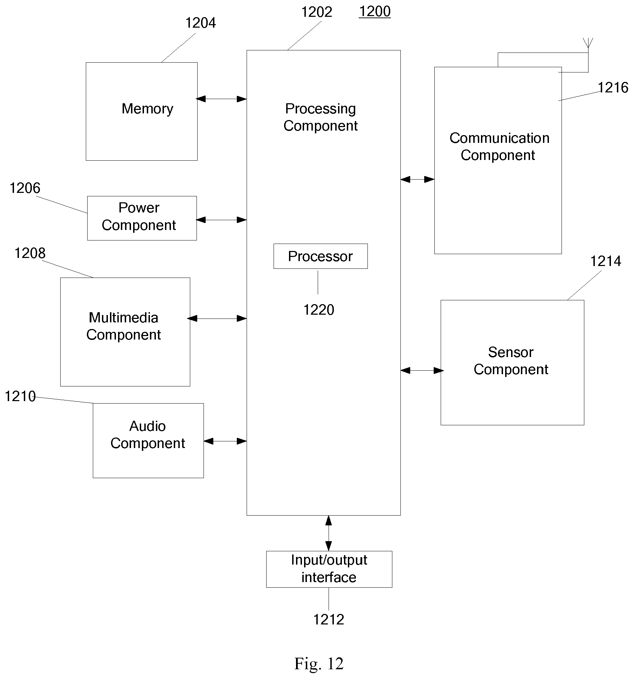

Fig. 12 is a block diagram of a device 1200 for backing up data according to an exemplary embodiment. For example, the device 1200 may be a mobile phone, a computer, a digital broadcast terminal, a messaging device, a gaming console, a tablet, a medical device, exercise equipment, a personal digital assistant, and the like.

Referring to Fig. 12, the device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The multimedia component 1208 includes a screen providing an output interface between the device 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone (MIC) configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200. For instance, the sensor component 1214 may detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the device 1200 and other devices. The device 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 in the device 1200, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium is provided. When instructions in the storage medium are executed by a processor of a mobile terminal, the mobile terminal may perform a method for backing up data. The method includes: determining whether a new file of a predetermined type exists locally; calculating a checked value corresponding to the new file according to a predetermined algorithm if the new file of the predetermined type exists; sending a query request containing the checked value to a router connected, so as to query whether a file having the checked value is stored in the router; backing up the new file to the router if determining that no file having the checked value is stored in the router according to a query result returned from the router.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method for backing up data, comprising:
a terminal joining a local network created by a router by an account login mechanism;
by the account login mechanism, the terminal determining whether a new file of a predetermined type exists locally on the terminal to trigger:
the terminal calculating a checked value corresponding to the new file according to a predetermined algorithm if the new file of the predetermined type exists;
the terminal sending a query request containing the checked value to a router connected, so as to query whether a file having the checked value is stored in the router comprising;
sending the query request to the router via a logged-in account if logging in the router according to account information previously registered, such that the router queries whether the file having the checked value is stored in backup data accessible to the logged-in account; and
backing up the new file to the router if determining that no file having the checked value is stored in the router according to a query result returned from the router.

2. The method according to claim 1, wherein backing up the new file to the router comprises:
sending the new file to the router via a logged-in account if logging in the router according to account information previously registered, such that the router backs up the new file to a path corresponding to the logged-in account.

3. The method according to claim 2, further comprising:
labeling the new file via an identifier of a local device, such that the router backs up the new file to a path corresponding to the logged-in account and the local device.

4. The method according to any preceding claim, further comprising:
sending a data access request to the router, and receiving information on backup data accessible to a logged-in account and returned from the router if logging in the router according to account information previously registered;
sending a data management instruction to the router, so as to manage the backup data accessible to the logged-in account.

5. A terminal for backing up data, comprising:
means for the terminal to join a local network created by a router by an account login mechanism,
an increment determining unit (71) configured to determine, by the account login mechanism, whether a new file of a predetermined type exists locally on the terminal and to trigger:
a checked value calculating unit (72) configured to calculate a checked value corresponding to the new file according to a predetermined algorithm if it is determined that the new file of the predetermined type exists;
a file query unit (73) configured to send a query request containing the checked value to a router connected, so as to query whether a file having the checked value is stored in the router;
a request sending subunit (731) configured to send the query request to the router via a logged-in account if the router is logged in according to account information previously registered, such that the router queries whether the file having the checked value is stored in backup data accessible to the logged-in account; and
a file backup unit (74) configured to back up the new file to the router if it is determined that no file having the checked value is stored in the router according to a query result returned from the router.

6. The terminal according to claim 5, wherein the file backup unit (74) comprises:
a file sending subunit (741) configured to send the new file to the router via a logged-in account if the router is logged in according to account information previously registered, such that the router backs up the new file to a path corresponding to the logged-in account.

7. The terminal according to claim 6, further comprising:
a file labeling unit (75) configured to label the new file via an identifier of a device to which the terminal for backing up data belongs, such that the router backs up the new file to a path corresponding to the logged-in account and the device to which the terminal for backing up data belongs.

8. The terminal according to any of claims 5 to 7, further comprising:
a data access unit (76) configured to send a data access request to the router, and to receive information on backup data accessible to a logged-in account and returned from the router if the router is logged in according to account information previously registered;
an instruction sending unit (77) configured to send a data management instruction to the router, so as to manage the backup data accessible to the logged-in account.

9. A program product having stored therein instructions that, when executed by a processor of a terminal, causes the terminal to perform:
joining a local network created by a router by an account login mechanism;
by the account login mechanism, determining whether a new file of a predetermined type exists locally on the terminal to trigger:
calculating a checked value corresponding to the new file according to a predetermined algorithm if the new file of the predetermined type exists;
sending a query request containing the checked value to a router connected, so as to query whether a file having the checked value is stored in the router comprising sending the query request to the router via a logged-in account if logging in the router according to the account information previously registered, such that the router queries whether the file having the checked value is stored in backup data accessible to the logged-in account; and
backing up the new file to the router if determining that no file having the checked value is stored in the router according to a query result returned from the router.

## Patentansprüche

1. Verfahren zur Datensicherung, umfassend:
Beitreten eines Endgeräts zu einem von einem Router hergestellten lokalen Netz über einen Kontoanmeldungsmechanismus;
Bestimmen durch das Endgerät über den Kontoanmeldungsmechanismus, ob eine neue Datei eines vorbestimmten Typs lokal am Endgerät vorhanden ist, um Folgendes auszulösen:
Berechnen eines geprüften Werts durch das Endgerät, der der neuen Datei entspricht, gemäß einem vorbestimmten Algorithmus, falls die neue Datei des vorbestimmten Typs vorhanden ist;
Senden einer Abfrageanforderung, die den geprüften Wert enthält, durch das Endgerät an einen angeschlossenen Router, um abzufragen, ob eine Datei, die den geprüften Wert hat, im Router gespeichert ist, umfassend:
Senden der Abfrageanforderung über ein angemeldetes Konto an den Router, falls der Router gemäß zuvor registrierten Kontoinformationen angemeldet wird, sodass der Router abfragt, ob die Datei, die den geprüften Wert hat, in Sicherungsdaten gespeichert ist, die für das angemeldete Konto zugänglich sind; und
Sichern der neuen Datei im Router, falls gemäß einem vom Router zurückgesendeten Abfrageergebnis bestimmt wird, dass keine Datei, die den geprüften Wert hat, im Router gespeichert ist.

2. Verfahren nach Anspruch 1, wobei das Sichern der neuen Datei im Router Folgendes aufweist:
Senden der neuen Datei über ein angemeldetes Konto an den Router, falls der Router gemäß zuvor registrierten Kontoinformationen angemeldet wird, sodass der Router die neue Datei in einem Pfad sichert, der dem angemeldeten Konto entspricht.

3. Verfahren nach Anspruch 2, das ferner Folgendes aufweist:
Bezeichnen der neuen Datei über eine Kennung einer lokalen Vorrichtung, sodass der Router die neue Datei in einem Pfad sichert, der dem angemeldeten Konto und der lokalen Vorrichtung entspricht.

4. Verfahren nach einem der vorhergehenden Ansprüche, das ferner Folgendes aufweist:
Senden einer Datenzugriffsanforderung an den Router und Empfangen von für ein angemeldetes Konto zugänglichen und von dem Router zurückgesendeten Informationen über Sicherungsdaten, falls der Router gemäß zuvor registrierten Kontoinformationen angemeldet wird;
Senden einer Datenverwaltungsanweisung an den Router, um die Sicherungsdaten, die für das angemeldete Konto zugänglich sind, zu verwalten.

5. Endgerät zur Datensicherung, umfassend:
ein Mittel, um das Endgerät einem von einem Router hergestellten lokalen Netz über einen Kontoanmeldungsmechanismus beitreten zu lassen;
eine Inkrementbestimmungseinheit (71), die konfiguriert ist zum Bestimmen über den Kontoanmeldungsmechanismus, ob eine neue Datei eines vorbestimmten Typs lokal am Endgerät vorhanden ist, und um Folgendes auszulösen:
eine Berechnungseinheit für einen geprüften Wert (72), die konfiguriert ist zum Berechnen eines geprüften Werts, der der neuen Datei entspricht, gemäß einem vorbestimmten Algorithmus, falls bestimmt wird, dass die neue Datei des vorbestimmten Typs vorhanden ist;
eine Dateiabfrageeinheit (73), die konfiguriert ist zum Senden einer Abfrageanforderung, die den geprüften Wert enthält, an einen angeschlossenen Router, um abzufragen, ob eine Datei, die den geprüften Wert hat, im Router gespeichert ist;
eine Anforderungssendeuntereinheit (731), die konfiguriert ist zum Senden der Abfrageanforderung über ein angemeldetes Konto an den Router, falls der Router gemäß zuvor registrierten Kontoinformationen angemeldet wird, sodass der Router abfragt, ob die Datei, die den geprüften Wert hat, in Sicherungsdaten gespeichert ist, die für das angemeldete Konto zugänglich sind; und
eine Dateisicherungseinheit (74), die konfiguriert ist zum Sichern der neuen Datei im Router, falls gemäß einem vom Router zurückgesendeten Abfrageergebnis bestimmt wird, dass keine Datei, die den geprüften Wert hat, im Router gespeichert ist.

6. Endgerät nach Anspruch 5, wobei die Dateisicherungseinheit (74) Folgendes aufweist:
eine Dateisendeuntereinheit (741), die konfiguriert ist zum Senden der neuen Datei über ein angemeldetes Konto an den Router, falls der Router gemäß zuvor registrierten Kontoinformationen angemeldet wird, sodass der Router die neue Datei in einem Pfad sichert, der dem angemeldeten Konto entspricht.

7. Endgerät nach Anspruch 6, das ferner Folgendes aufweist:
eine Dateibezeichnungseinheit (75), die konfiguriert ist zum Bezeichnen der neuen Datei über eine Kennung einer Vorrichtung, zu der das Endgerät zum Sichern von Daten gehört, sodass der Router die neue Datei in einem Pfad sichert, der dem angemeldeten Konto und der Vorrichtung, zu der das Endgerät zum Sichern von Daten gehört, entspricht.

8. Endgerät nach einem der Ansprüche 5 bis 7, das ferner Folgendes aufweist:
eine Datenzugriffseinheit (76), die konfiguriert ist zum Senden einer Datenzugriffsanforderung an den Router und Empfangen von für ein angemeldetes Konto zugänglichen und von dem Router zurückgesendeten Informationen über Sicherungsdaten, falls der Router gemäß zuvor registrierten Kontoinformationen angemeldet wird;
eine Anweisungssendeeinheit (77), die konfiguriert ist zum Senden einer Datenverwaltungsanweisung an den Router, um die Sicherungsdaten, die für das angemeldete Konto zugänglich sind, zu verwalten.

9. Programmprodukt, in dem Anweisungen gespeichert sind, die bei Ausführung durch einen Prozessor eines Endgeräts das Endgerät zur Durchführung von Folgendem veranlassen:
Beitreten zu einem von einem Router hergestellten lokalen Netz über einen Kontoanmeldungsmechanismus;
Bestimmen über den Kontoanmeldungsmechanismus, ob eine neue Datei eines vorbestimmten Typs lokal am Endgerät vorhanden ist, um Folgendes auszulösen:
Berechnen eines geprüften Werts, der der neuen Datei entspricht, gemäß einem vorbestimmten Algorithmus, falls die neue Datei des vorbestimmten Typs vorhanden ist;
Senden einer Abfrageanforderung, die den geprüften Wert enthält, an einen angeschlossenen Router, um abzufragen, ob eine Datei, die den geprüften Wert hat, im Router gespeichert ist, umfassend Senden der Abfrageanforderung über ein angemeldetes Konto an den Router, falls der Router gemäß den zuvor registrierten Kontoinformationen angemeldet wird, sodass der Router abfragt, ob die Datei, die den geprüften Wert hat, in Sicherungsdaten gespeichert ist, die für das angemeldete Konto zugänglich sind; und
Sichern der neuen Datei im Router, falls gemäß einem vom Router zurückgesendeten Abfrageergebnis bestimmt wird, dass keine Datei, die den geprüften Wert hat, im Router gespeichert ist.

## Revendications

1. Procédé de sauvegarde de données, comprenant :
le rattachement d'un terminal à un réseau local créé par un routeur par un mécanisme de connexion à un compte ;
la détermination par le terminal, au moyen du mécanisme de connexion à un compte,
qu'un nouveau fichier d'un type prédéterminé existe ou non localement sur le terminal pour déclencher :
le calcul par le terminal d'une valeur vérifiée correspondant au nouveau fichier conformément à un algorithme prédéterminé si le nouveau fichier du type prédéterminé existe ;
l'envoi par le terminal d'une requête d'interrogation contenant la valeur vérifiée à un routeur connecté, de manière à s'informer qu'un fichier ayant la valeur vérifiée est mémorisé ou non dans le routeur comprenant :
l'envoi de la requête d'interrogation au routeur par l'intermédiaire d'un compte connecté en cas de connexion dans le routeur conformément à des informations de compte précédemment enregistrées, de telle sorte que le routeur s'informe que le fichier ayant la valeur vérifiée est mémorisé ou non dans des données de sauvegarde accessibles par le compte connecté ; et
la sauvegarde du nouveau fichier sur le routeur s'il est déterminé qu'aucun fichier ayant la valeur vérifiée n'est mémorisé dans le routeur conformément à un résultat d'interrogation renvoyé par le routeur.

2. Procédé selon la revendication 1, dans lequel la sauvegarde du nouveau fichier sur le routeur comprend :
l'envoi du nouveau fichier au routeur par l'intermédiaire d'un compte connecté en cas de connexion dans le routeur conformément à des informations de compte précédemment enregistrées, de telle sorte que le routeur sauvegarde le fichier sur un chemin correspondant au compte connecté.

3. Procédé selon la revendication 2, comprenant en outre :
la désignation du nouveau fichier par l'intermédiaire d'un identifiant d'un dispositif local, de telle sorte que le routeur sauvegarde le nouveau fichier sur un chemin correspondant au compte connecté et au dispositif local.

4. Procédé selon l'une quelconque des revendications précédentes, comprenant en outre :
l'envoi au routeur d'une requête d'accès aux données, et la réception d'informations sur des données de sauvegarde accessibles par un compte connecté et renvoyées par le routeur en cas de connexion dans le routeur conformément à des informations de compte précédemment enregistrées ;
l'envoi d'une instruction de gestion de données au routeur, de manière à gérer les données de sauvegarde accessibles par le compte connecté.

5. Terminal de sauvegarde de données, comprenant :
un moyen de rattachement d'un terminal à un réseau local créé par un routeur par un mécanisme de connexion à un compte ;
une unité de détermination d'incrément (71) configurée pour déterminer, au moyen du mécanisme de connexion à un compte, qu'un nouveau fichier d'un type prédéterminé existe ou non localement sur le terminal et pour déclencher :
une unité de calcul de valeur vérifiée (72) configurée pour calculer une valeur vérifiée correspondant au nouveau fichier conformément à un algorithme prédéterminé s'il est déterminé que le nouveau fichier du type prédéterminé existe ;
une unité d'interrogation de fichier (73) configurée pour envoyer une requête d'interrogation contenant la valeur vérifiée à un routeur connecté, de manière à s'informer qu'un fichier ayant la valeur vérifiée est mémorisé ou non dans le routeur ;
une sous-unité d'envoi de requête (731) configurée pour envoyer la requête d'interrogation au routeur par l'intermédiaire d'un compte connecté en cas de connexion dans le routeur conformément à des informations de compte précédemment enregistrées, de telle sorte que le routeur s'informe que le fichier ayant la valeur vérifiée est mémorisé ou non dans des données de sauvegarde accessibles par le compte connecté ; et
une unité de sauvegarde de fichier (74) configurée pour sauvegarder le nouveau fichier sur le routeur s'il est déterminé qu'aucun fichier ayant la valeur vérifiée n'est mémorisé dans le routeur conformément à un résultat d'interrogation renvoyé par le routeur.

6. Terminal selon la revendication 5, dans lequel l'unité de sauvegarde de fichier (74) comprend :
une sous-unité d'envoi de fichier (741) configurée pour envoyer le nouveau fichier au routeur par l'intermédiaire d'un compte connecté en cas de connexion du routeur conformément à des informations de compte précédemment enregistrées, de telle sorte que le routeur sauvegarde le fichier sur un chemin correspondant au compte connecté.

7. Terminal selon la revendication 6, comprenant en outre :
une unité de désignation de fichier (75) configurée pour désigner le nouveau fichier par l'intermédiaire d'un identifiant d'un dispositif auquel appartient le terminal de sauvegarde de données, de telle sorte que le routeur sauvegarde le nouveau fichier sur un chemin correspondant au compte connecté et au dispositif auquel appartient le terminal de sauvegarde de données.

8. Terminal selon l'une quelconque des revendications 5 à 7, comprenant en outre :
une unité d'accès aux données (76) configurée pour envoyer au routeur une requête d'accès aux données, et recevoir des informations sur des données de sauvegarde accessibles par un compte connecté et renvoyées par le routeur en cas de connexion du routeur conformément à des informations de compte précédemment enregistrées ;
une unité d'envoi d'instruction (77) configurée pour envoyer une instruction de gestion de données au routeur, de manière à gérer les données de sauvegarde accessibles par le compte connecté.

9. Produit de programme sur lequel sont mémorisées des instructions qui, à leur exécution par un processeur d'un terminal, amènent le terminal à exécuter :
un rattachement à un réseau local créé par un routeur par un mécanisme de connexion à un compte ;
au moyen du mécanisme de connexion à un compte, une détermination qu'un nouveau fichier d'un type prédéterminé existe ou non localement sur le terminal pour déclencher :
le calcul d'une valeur vérifiée correspondant au nouveau fichier conformément à un algorithme prédéterminé si le nouveau fichier du type prédéterminé existe ;
l'envoi d'une requête d'interrogation contenant la valeur vérifiée à un routeur connecté, de manière à s'informer qu'un fichier ayant la valeur vérifiée est mémorisé ou non dans le routeur comprenant l'envoi de la requête d'interrogation au routeur par l'intermédiaire d'un compte connecté en cas de connexion dans le routeur conformément à des informations de compte précédemment enregistrées, de telle sorte que le routeur s'informe que le fichier ayant la valeur vérifiée est mémorisé ou non dans des données de sauvegarde accessibles par le compte connecté ; et
la sauvegarde du nouveau fichier sur le routeur s'il est déterminé qu'aucun fichier ayant la valeur vérifiée n'est mémorisé dans le routeur conformément à un résultat d'interrogation renvoyé par le routeur.
